# FASCICULE DE BREVET EUROPEEN

(11) **EP 1 844 170 B1**
(45) Date de publication et mention de la délivrance du brevet: **30.12.2009**
(21) Numéro de dépôt: 06709456.5
(22) Date de dépôt: 30.01.2006
(51) Int. Cl.: C22C 1/05, F16D 23/02, B22F 5/08

(54) **BAGUE DE SYNCHRONISATION ET SON PROCEDE DE FABRICATION**
SYNCHRONRING UND HERSTELLUNGSVERFAHREN DAFÜR
SYNCHRONISER RING AND PRODUCTION METHOD THEREOF

(30) Priorité: 31.01.2005 FR 0550265
(43) Date de publication de la demande: 17.10.2007
(73) Titulaire: Federal Mogul Operations France SAS, 45140 Saint Jean De La Ruelle (FR)
(72) Inventeur: BLANCHARD, Pierre, F-38500 Coublevie (FR); DURAND, Christophe, F-38450 Vif (FR)
(74) Mandataire: de Beaumont, Michel
(86) Numéro de dépôt international: PCT/FR2006/050072
(87) Numéro de publication internationale: WO 2006/079762

(56) Documents cités:
- EP-A- 0 965 769
- EP-A- 1 013 783
- US-A- 5 900 559

## Description

La présente invention concerne une bague de synchronisation obtenue par frittage et destinée à être utilisée dans un milieu lubrifié, par exemple dans une boîte de vitesses, et un procédé de préparation d'une telle pièce.

Une bague de synchronisation est entraînée en rotation par un arbre de la boîte de vitesses et est destinée, lors d'un changement d'un rapport de vitesse, à égaliser la vitesse de rotation d'un pignon fou monté sur l'arbre et la vitesse de rotation de l'arbre avant le crabotage du pignon sur l'arbre.

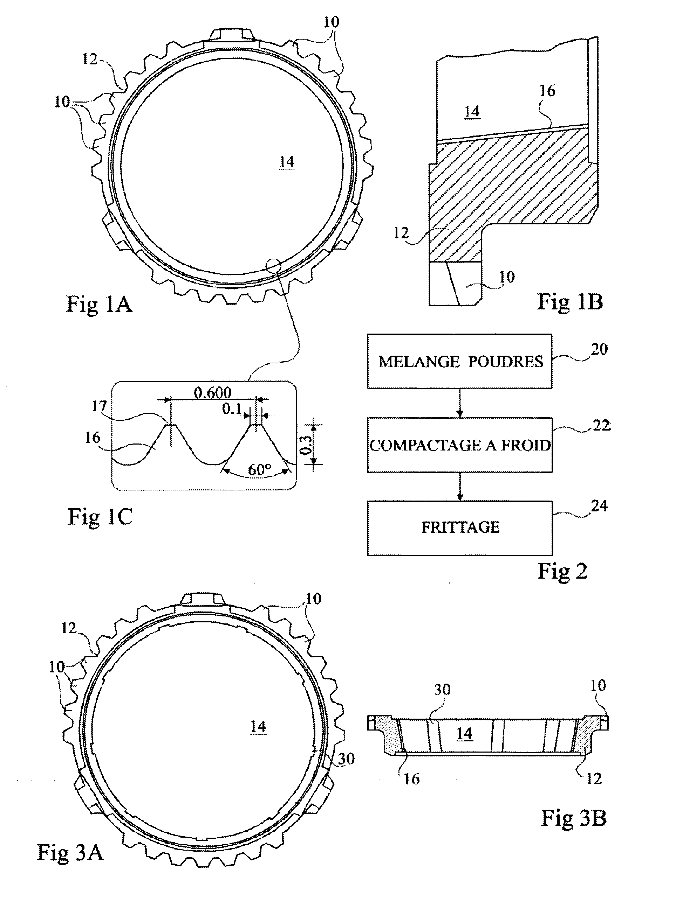

Les figures 1A et 1B sont respectivement une vue de face et une coupe partielle d'une bague de synchronisation classique. Un exemple de telle bague est décrit dans la demande de brevet européen EP 0 965 769 déposée au nom de la demanderesse. La bague de synchronisation comprend des rampes 10 réparties sur son pourtour afin d'appliquer sur celles-ci l'effort de poussée du baladeur (non représenté) pendant la phase d'égalisation des vitesses. Comme cela est visible en figure 1B, les rampes 10 ne s'étendent que sur une partie de la hauteur de la bague et affleurent une extrémité de celle-ci. Par ailleurs, la bague comporte une zone périphérique amincie 12 qui se raccorde aux rampes 10.

La bague de synchronisation est munie d'un alésage central conique 14, le plus grand diamètre étant du côté des rampes 10. Des dents axiales 16 peuvent être régulièrement réparties sur l'alésage conique 14. Les dents axiales 16 sont destinées à coopérer avec une portée conique du pignon fou afin d'assurer une synchronisation rapide de la bague et du pignon par frottement puis égalisation des vitesses des parties coniques.

La bague de synchronisation et le pignon fou comportent généralement des surfaces coniques complémentaires, la synchronisation étant obtenue par la coopération des deux surfaces coniques. La bague de synchronisation est utilisée en milieu lubrifié en contact avec de l'acier de dureté élevée et doit fournir une synchronisation souple et rapide du pignon quelles que soient les conditions de température, de pression de contact et de vitesse de frottement. Pour cela, il est nécessaire d'obtenir un coefficient de frottement entre les surfaces coniques complémentaires du pignon et de la bague adapté et stable, c'est-à-dire indépendant des conditions de température, de vitesse et de pression.

Le laiton, matériau le plus couramment utilisé pour la fabrication des bagues de synchronisation, donne satisfaction pour la plupart des conditions de fonctionnement.

L'utilisation d'acier fritté pour la fabrication de la bague de synchronisation nécessite généralement le dépôt d'un revêtement de molybdène sur la portée conique du pignon fou en contact avec la bague de synchronisation, ou la réalisation, par cofrittage, d'une couche de friction sur la surface active de la bague de synchronisation. Ces méthodes sont cependant coûteuses et ne conduisent pas forcément à des performances supérieures à celles du laiton.

Il est possible d'améliorer notablement le comportement de frottement des bagues de synchronisation, et notamment d'obtenir des bagues de synchronisation ayant un coefficient de frottement adapté et indépendant des conditions de fonctionnement, en utilisant pour la fabrication de telles bagues un matériau fritté constitué d'une matrice relativement tendre à base de poudre de fer et de particule d'élément d'alliage, la matrice renfermant en outre des particules de renforcement de dureté supérieure. La dureté Vickers des particules de renforcement est généralement au moins égale à 2000 HV. Un tel procédé est décrit dans la demande de brevet EP1013783 déposée aux noms de la demanderesse et de Renault.

Les particules de renforcement sont choisies parmi des particules de type oxyde, de type nitrure ou de type carbure. On peut indiquer à titre d'exemple de telles particules de renforcement l'alumine (Al₂O₃), le carbure de niobium (NbC) ou le nitrure de titane (TiN). On peut également utiliser des particules composites de renforcement, à savoir des particules portant un revêtement d'une nature chimique différente de celle du noyau. Un exemple de telles particules sont des particules d'alumine revêtues d'un dépôt de nitrure de titane. Les particules de renforcement ont une taille moyenne du même ordre de grandeur que celles des particules à base de fer formant la matrice, à savoir une taille comprise entre 20 et 100 micromètres et de préférence entre 40 et 50 micromètres.

Une bague de synchronisation réalisée à partir du matériau précédemment décrit présente généralement un excellent comportement de friction et en particulier un coefficient de frottement adapté et qui varie très peu en fonction des conditions de fonctionnement telles que la température, la pression de contact et la vitesse de frottement. Une telle bague de synchronisation peut être réalisée par un procédé classique consistant, par exemple, à mélanger à sec les différentes poudres formant la matrice et la poudre ou les poudres de particules de renforcement, à procéder à un compactage à froid du mélange de poudres dans un moule approprié, puis à fritter la pièce obtenue sous une atmosphère contrôlée à une température de l'ordre de 1120°C.

De tels procédés permettent d'obtenir des pièces massives, prêtes à monter, ne nécessitant pas de traitement supplémentaire. La bonne maîtrise du procédé de compactage à froid permet par ailleurs d'obtenir directement des produits finis aux côtes.

Toutefois, la présence des particules de renforcement dans la matrice entraîne une usure supplémentaire du moule utilisé pour le compactage à froid des poudres qui entraîne un remplacement plus fréquent du moule de compactage, ce qui augmente le coût de fabrication des bagues de synchronisation.

La présente invention vise une bague de synchronisation obtenue par frittage et un procédé de fabrication d'une telle bague de synchronisation ne présentant pas les inconvénients précédemment décrits.

Pour atteindre cet objet, la présente invention prévoit un procédé de fabrication d'une bague de synchronisation, destinée à fonctionner en milieu lubrifié dans une boîte de transmission, consistant à mélanger, jusqu'à obtention d'un mélange homogène :
au moins deux poudres parmi une poudre de particules de fer, une poudre d'éléments d'alliage choisis parmi le cuivre, le nickel et le molybdène et une poudre d'alliages de fer choisis parmi des alliages de fer et de nickel, de fer et de molybdène, et de fer, de nickel et de molybdène ;
une poudre de particules d'alliage de fer contenant des éléments d'alliage carburigènes dans une quantité comprise entre 1 et 10 % en poids ; et
une poudre de graphite dans une quantité inférieure à 1 % en poids ;
à compacter le mélange de poudres à froid dans un moule approprié pour former un alésage interne conique muni de dents axiales, les sommets des dents comportant un méplat de largeur inférieure à 0,2 mm ; et à consolider la pièce ainsi obtenue par frittage dans une atmosphère contrôlée à une température inférieure à 1150°C, de façon à obtenir une matrice d'acier contenant lesdits éléments d'alliage et des zones d'alliages de fer enrichies en carbure, cohérentes avec la matrice.

Selon un mode de réalisation de la présente invention, le pas des dents est inférieur à 0,7 mm.

Selon un mode de réalisation de la présente invention, la hauteur des dents est inférieure à 0,4 mm.

Selon un mode de réalisation de la présente invention, les éléments d'alliage carburigènes sont choisis parmi le cobalt, le tungstène, le vanadium et le niobium.

Selon un mode de réalisation de la présente invention, le mélange contient de 2% à 7% en poids de particules d'alliage de fer contenant des éléments d'alliage carburigènes.

Selon un mode de réalisation de la présente invention, le mélange de poudres ne contient pas de lubrifiant solide.

La présente invention prévoit également une bague de synchronisation, réalisée par frittage à une température inférieure à 1150°C, destinée à fonctionner en milieu lubrifié dans une boîte de transmission, comprenant un alésage interne conique muni de dents axiales, les sommets des dents comportant un méplat de largeur inférieure à 0,2 mm, et contenant une matrice d'acier contenant des éléments choisis parmi le cuivre, le nickel et le molybdène ; et des zones d'alliages de fer enrichies en carbure, cohérentes avec la matrice dans une proportion comprise entre 1 et 10 % en volume.

Selon un mode de réalisation de la présente invention, le pas des dents est inférieur à 0,7 mm et la hauteur des dents est inférieure à 0,4 mm.

Selon un mode de réalisation de la présente invention, les zones d'alliages de fer enrichies en carbure contiennent un élément ou plusieurs éléments parmi le cobalt, le tungstène, le vanadium et le niobium.

Selon un mode de réalisation de la présente invention, la bague de synchronisation comprend, en outre, des gorges axiales réparties sur l'alésage interne conique, chaque gorge s'étendant sur une surface correspondant à au moins trois dents axiales consécutives, deux gorges successives étant séparées par au moins dix dents axiales.

Cet objet, ces caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1A à 1B, précédemment décrites, sont respectivement une vue de face et une vue en coupe partielle d'une bague de synchronisation classique à dents axiales ;
la figure 1C est une vue de détail de la bague de synchronisation des figures 1A et 1C selon un premier exemple de réalisation de l'invention ;
la figure 2 représente un schéma par blocs d'un exemple de réalisation du procédé de fabrication d'une bague de synchronisation selon le premier exemple de réalisation de l'invention ; et
les figures 3A et 3B sont respectivement une vue de face et une vue en coupe simplifiée d'un second exemple de réalisation d'une bague de synchronisation selon l'invention.

Comme cela est représenté en figure 1C, selon le premier exemple de réalisation, les dents axiales 16 de la bague de synchronisation ont une forme acérée. En pratique, les sommets les plus acérés que l'on puisse obtenir comportent des méplats ou des arrondis qui dépendent de la technique de fabrication utilisée. Par un procédé de frittage, on peut obtenir des sommets qui comportent un méplat 17 inférieur à 0,2 millimètre, généralement de l'ordre de 0,1 millimètre. Dans l'exemple de bague représenté en figure 1C, les dents ont un pas de 0,6 millimètre et une hauteur de 0,3 millimètre. Ces dimensions sont bien entendu variables, mais on choisit généralement un méplat inférieur à 0,2 millimètre, un pas inférieur à 0,7 millimètre et une hauteur inférieure à 0,4 millimètre.

Comme cela est représenté en figure 2, le procédé de fabrication d'une bague de synchronisation selon le premier exemple de réalisation comprend une première étape 20 consistant à mélanger à sec plusieurs poudres pour obtenir un mélange homogène de poudres comprenant une matrice formée à partir de particules à base de fer et de particules d'un élément d'alliage ou de plusieurs éléments d'alliage.

Les poudres utilisables pour former la matrice sont généralement des poudres à base de fer constituées de particules ayant une taille moyenne comprise entre 10 et 250 micromètres, et de préférence entre 20 et 150 micromètres. Les éléments d'alliage sont généralement choisis parmi le cuivre, le nickel et le molybdène et sont généralement ajoutés sous forme de poudre métallique. La quantité recommandée de poudre d'élément d'alliage est généralement comprise entre 2 et 7 % en poids et de préférence entre 4 et 6 % en poids par rapport à la matrice totale. Il est par ailleurs possible d'ajouter à ce mélange de poudres formant la matrice une faible quantité de carbone destiné à augmenter la dureté de la matrice du produit fini. Le carbone est ajouté habituellement sous forme de graphite en des quantités ne dépassant pas 1 % en poids rapporté à la matrice totale, avantageusement au plus égales à 0,8 % en poids, et de façon encore plus avantageuse au plus égales à 0,6 % en poids.

On ajoute à la matrice ainsi obtenue une poudre d'un acier rapide comprenant des particules ayant une taille moyenne du même ordre de grandeur que celles des particules à base de fer et de particules d'éléments d'alliage, à savoir comprise entre 10 et 250 micromètres, de préférence entre 20 et 150 micromètres. La quantité recommandée de poudre d'acier rapide est généralement comprise entre 1 et 10 % en poids rapporté à la matrice totale, avantageusement entre 2 et 7 % en poids et de façon encore plus avantageuse entre 4 et 6 % en poids. La poudre d'acier rapide peut, par exemple, correspondre aux aciers rapides commercialisés par la société Powdrex sous les désignations commerciales T15 ou M2.

Le procédé selon la présente invention comprend une deuxième étape 22 consistant à procéder à un compactage à froid du mélange de poudres dans un moule ayant une forme appropriée pour l'obtention des dents 16 axiales acérées précédemment décrites. Une troisième étape 24 consiste alors à fritter la pièce issue du compactage à froid sous une atmosphère contrôlée à des températures inférieures à 1150°C. De telles températures sont donc très inférieures aux températures généralement utilisées lors de la fabrication de pièces frittées réalisées en totalité à partir d'acier rapide qui sont généralement supérieures à 1200°C.

Lors de l'étape de frittage, il se forme, au niveau des particules d'acier rapide, des phases carburées qui ont une dureté élevée, généralement au moins égale à 2000 HV. On obtient donc, après frittage, une matrice d'acier contenant des phases carburées cohérentes avec la matrice. La proportion des phases carburées est de façon générale comprise entre 1 et 10 % en volume par rapport à la matrice totale, et de préférence entre 2 et 7 % en volume.

La demanderesse a mis en évidence qu'une bague de synchronisation à dents axiales acérées obtenue selon le procédé de fabrication précédemment décrit, et notamment avec les plages de proportions de phases carburées précédemment mentionnées, ont des propriétés mécaniques similaires à celles obtenues pour une bague de synchronisation classique réalisée par un procédé consistant à ajouter des particules de renforcement dans le mélange de poudres initial. En particulier, les phases carburées ayant une dureté élevée confèrent aux bagues de synchronisation un excellent comportement de friction et en particulier un coefficient de frottement adapté et qui varie très peu en fonction des conditions de fonctionnement telles que la température, la pression de contact et la vitesse de frottement. En outre, puisque les phases carburées se forment pendant l'étape de frittage, il n'y a pas, à l'étape 22, d'usure excessive du moule utilisé pour le compactage à froid du mélange de poudres.

De plus, la structure à dents acérées de la bague de synchronisation selon l'invention permet de réduire le coût de fabrication d'une telle bague de synchronisation notamment en minimisant la proportion de phases carburées à prévoir dans la matrice d'acier pour optimiser le coefficient de frottement entre la bague de synchronisation et un pignon fou lors d'une étape de synchronisation et en évitant l'ajout de lubrifiant solide dans le mélange de poudres utilisé pour fabriquer la bague de synchronisation.

En effet, la matrice d'acier a une dureté moins élevée que les phases carburées et tend donc à gripper davantage lors d'une étape de synchronisation. Si la lubrification de la bague de synchronisation était insuffisante, il serait nécessaire de prévoir une proportion importante de phases carburées dans la composition finale de la bague de synchronisation et/ou d'ajouter un lubrifiant solide à la composition de la bague de synchronisation pour éviter le grippage de la matrice. La faible dimension des dents acérées 16 permet de limiter tout phénomène de grippage entre la bague de synchronisation et un pignon fou lors d'une étape de synchronisation. Une explication de l'absence de grippage serait due au fait que la surface de contact entre chaque dent 16 de la bague de synchronisation et le pignon fou a une aire réduite et reste entourée d'huile de lubrification. Toutefois, la forme acérée des dents 16 de la bague de synchronisation facilite l'évacuation locale d'huile au niveau des sommets des dents 16 et permet d'obtenir un coefficient de frottement suffisant entre la bague de synchronisation et le pignon fou. On obtient, avec une telle forme de bague de synchronisation en combinaison avec la composition de la bague de synchronisation précédemment décrite, des caractéristiques de frottement optimales pour permettre une synchronisation rapide.

Il n'est donc pas nécessaire d'ajouter un lubrifiant solide dans la composition de la bague de synchronisation. Un tel lubrifiant solide est généralement utilisé pour éviter tout phénomène de grippage. L'absence d'ajout de lubrifiant solide diminue le coût de fabrication de la bague de synchronisation tout en en augmentant la résistance mécanique. Par ailleurs, la présente invention permet de minimiser la proportion de phases carburées à prévoir dans la bague de synchronisation pour obtenir un comportement de friction et en particulier un coefficient de frottement adapté et qui varie très peu en fonction des conditions de fonctionnement. La limitation de la quantité de poudre d'acier rapide à ajouter au mélange de poudres permet également de réduire le coût de fabrication de la bague de synchronisation.

L'exemple suivant est destiné à illustrer de façon plus détaillée l'invention sans pour autant présenter un caractère limitatif.

On utilise un pourcentage en poids de particules d'élément d'alliage de 1,5 % de cuivre, 4 % de nickel et 0,5 % de molybdène. La matrice peut en outre contenir 0,8 % en poids de graphite ajouté sous forme de poudre. On prévoit un pourcentage en poids d'acier rapide de 4 à 7 %. Ces pourcentages sont exprimés par rapport au poids total de la matrice (poudre de fer + élément d'alliage + graphite). A titre d'exemple, on peut utiliser l'acier rapide commercialisé par Powdrex sous la dénomination commerciale M2 qui comporte environ 0.8% de carbone, 4% de chrome, 5% de molybdène, 6% de tungstène, 0.5% de cobalt et 2% de vanadium.

Les figures 3A et 3B sont respectivement une vue de face et une vue en coupe simplifiée d'un second exemple de réalisation d'une bague de synchronisation selon l'invention.

Selon le second exemple de réalisation, on prévoit au niveau de l'alésage central conique 14, en plus des dents axiales 16, des gorges 30 qui s'étendent selon l'axe de l'alésage central conique 14. Dans un plan perpendiculaire à l'axe de la bague, chaque gorge 30 s'étend sur un arc de cercle dont la longueur est supérieure à la longueur d'un arc de cercle correspondant à au moins trois dents axiales 16 consécutives. A titre d'exemple, pour une bague de synchronisation ayant un alésage central conique 14 dont le diamètre moyen est d'environ 50 millimètres, chaque gorge 30 s'étend sur un arc de cercle dont la longueur est inférieure à la longueur d'un arc de cercle correspondant à une dizaine de dents axiales 16 consécutives. Bien entendu, la limite supérieure de la longueur de l'arc de cercle sur lequel s'étend chaque gorge 30 dépend du diamètre moyen de l'alésage central conique 14 de la bague de synchronisation. La section des gorges 30, dans un plan perpendiculaire à l'axe de la bague de synchronisation est par exemple rectangulaire, trapézoïdale, en forme de "V", de "U", etc. Les sections des gorges 30 sont, de préférence, identiques. Le nombre de gorges 30 et leur position relative varient en fonction des efforts exercés sur les crabots 10, notamment pendant une étape de synchronisation. Toutefois, deux gorges 30 successives sont au moins séparées par dix dents axiales 16. Dans l'exemple de réalisation représenté en figure 3A, neuf gorges 30 sont représentées uniformément réparties sur la circonférence de l'alésage central conique 14. De préférence, la bague de synchronisation à dents axiales 16 selon l'invention comporte au moins six gorges 30.

La demanderesse a mis en évidence que, pour le second exemple de réalisation selon l'invention, la présence des gorges 30 améliore la rétention d'huile pour qu'un film d'huile suffisant se maintienne à la fin d'une étape de synchronisation entre les dents 16 de la bague de synchronisation et la portée conique du pignon fou de façon à éviter une augmentation brutale du coefficient de frottement entre la bague de synchronisation et le pignon fou. Le coefficient de frottement tend alors à rester, à la fin de l'étape de synchronisation, sensiblement constant et égal à un coefficient de frottement optimal.

La demanderesse a également mis en évidence que la présence de gorges axiales 30, associées aux dents axiales 16, permet une meilleure évacuation du film d'huile au début de l'étape de synchronisation, entraînant une augmentation plus rapide du coefficient de frottement vers le coefficient de frottement optimal. La présence des gorges 30 permet donc d'améliorer encore davantage l'évolution du coefficient de frottement au cours d'une étape de synchronisation.

La bague de synchronisation selon le second exemple de réalisation de l'invention est obtenue par le procédé de fabrication précédemment décrit. En effet, la forme des gorges 30 peut être choisie de façon qu'elles ne présentent pas de contre dépouille ce qui permet d'obtenir une bague terminée en une seule étape de fabrication.

## Revendications

1. Procédé de fabrication d'une bague de synchronisation, destinée à fonctionner en milieu lubrifié dans une boîte de transmission, comprenant les étapes suivante :
- mélanger, jusqu'à obtention d'un mélange homogène :
au moins deux poudres parmi une poudre de particules de fer, une poudre d'éléments d'alliage choisis parmi le cuivre, le nickel et le molybdène et une poudre d'alliages de fer choisis parmi des alliages de fer et de nickel, de fer et de molybdène, et de fer, de nickel et de molybdène ;
une poudre de particules d'alliage de fer contenant des éléments d'alliage carburigènes dans une quantité comprise entre 1 et 10 % en poids ; et
une poudre de graphite dans une quantité inférieure à 1 % en poids ;
- compacter le mélange de poudres à froid dans un moule approprié pour former un alésage interne conique (14) muni de dents axiales (16), les sommets des dents (16) comportant un méplat (17) de largeur inférieure à 0,2 mm ; et
- consolider la pièce ainsi obtenue par frittage dans une atmosphère contrôlée à une température inférieure à 1150°C, de façon à obtenir une matrice d'acier contenant lesdits éléments d'alliage et des zones d'alliages de fer enrichies en carbure, cohérentes avec la matrice.

2. Procédé selon la revendication 1, dans lequel le pas des dents est inférieur à 0,7 mm.

3. Procédé selon la revendication 1, dans lequel la hauteur des dents est inférieure à 0,4 mm.

4. Procédé selon la revendication 1, dans lequel les éléments d'alliage carburigènes sont choisis parmi le cobalt, le tungstène, le vanadium et le niobium.

5. Procédé selon la revendication 1, dans lequel le mélange contient de 2% à 7% en poids de particules d'alliage de fer contenant des éléments d'alliage carburigènes.

6. Procédé selon la revendication 1, dans lequel le mélange de poudres ne contient pas de lubrifiant solide.

7. Bague de synchronisation, réalisée par frittage à une température inférieure à 1150°C, destinée à fonctionner en milieu lubrifié dans une boîte de transmission, comprenant un alésage interne conique (14) muni de dents axiales (16), les sommets des dents (16) comportant un méplat (17) de largeur inférieure à 0,2 mm, et contenant :
- une matrice d'acier contenant des éléments choisis parmi le cuivre, le nickel et le molybdène ; et
- des zones d'alliages de fer enrichies en carbure, cohérentes avec la matrice dans une proportion comprise entre 1 et 10 % en volume.

8. Bague de synchronisation selon la revendication 7, dans lequel le pas des dents est inférieur à 0,7 mm et dans lequel la hauteur des dents est inférieure à 0,4 mm.

9. Bague de synchronisation selon la revendication 7, dans laquelle les zones d'alliages de fer enrichies en carbure contiennent un élément ou plusieurs éléments parmi le cobalt, le tungstène, le vanadium et le niobium.

10. Bague de synchronisation selon la revendication 7, comprenant, en outre, des gorges (30) axiales réparties sur l'alésage interne conique (14), chaque gorge s'étendant sur une surface correspondant à au moins trois dents axiales (16) consécutives, deux gorges successives étant séparées par au moins dix dents axiales.

## Claims

1. A method for manufacturing a synchronizer ring, intended to operate in a lubricated environment in a gearbox, comprising the steps of:
- mixing, until a homogeneous mixture is obtained:
at least two powders from among an iron particle powder, a powder of alloy elements selected from among copper, nickel, and molybdenum, and a powder of iron alloys selected from among iron-nickel, iron-molybdenum, and iron-nickel-molybdenum alloys;
a powder of iron alloy particles containing carbide-forming alloy elements in a quantity ranging between 1 and 10% by weight; and
a graphite powder in an quantity smaller than 1% by weight;
- cold compacting the powder mixture in an appropriate mould to form a conical internal bore (14) provided with axial teeth (16), the crests of the teeth (16) comprising a flat section (17) having a width smaller than 0.2 mm; and
- stiffening the part thus obtained by sintering in a controlled atmosphere at a temperature lower than 1150°C, to obtain a steel matrix containing said alloy elements and carbide-enriched iron alloy area, coherent with the matrix.

2. The method of claim 1, wherein the teeth pitch is smaller than 0.7 mm.

3. The method of claim 1, wherein the teeth height is lower than 0.4 mm.

4. The method of claim 1, wherein the carbide-forming alloy elements are selected from among cobalt, tungsten, vanadium, and niobium.

5. The method of claim 1, wherein the mixture contains from 2% to 7% by weight of iron alloy particles containing carbide-forming alloy elements.

6. The method of claim 1, wherein the powder mixture contains no solid lubricant.

7. A synchronizer ring, formed by sintering at a temperature lower than 1150°C, intended to operate in a lubricated environment in a gearbox, comprising a conical internal bore (14) provided with axial teeth (16), the crests of the teeth (16) comprising a flat section (17) of a width smaller than 0.2 mm, and containing:
- a steel matrix containing elements selected from among copper, nickel, and molybdenum; and
- carbide-enriched iron alloy areas coherent with the matrix in a proportion ranging between 1 and 10% by volume.

8. The synchronizer ring of claim 7, wherein the teeth pitch is smaller than 0.7 mm and wherein the teeth height is lower than 0.4 mm.

9. The synchronizer ring of claim 7, wherein the carbide-enriched iron alloy areas contain one element or several elements from among cobalt, tungsten, vanadium, and niobium.

10. The synchronizer ring of claim 7, further comprising axial grooves (30) distributed on the conical internal bore (14), each groove extending across a surface corresponding to at least three consecutive axial teeth (16), two successive grooves being separated by at least ten axial teeth.

## Patentansprüche

1. Verfahren zum Herstellen eines Synchronisationsrings, der geeignet ist zum Betrieb in einer geschmierten Umgebung in einem Getriebe, wobei das Verfahren die folgenden Schritte aufweist:
Mischen bis eine homogene Mischung erhalten wird: von mindestens zwei Pulvern, ausgewählt aus einem Eisenpartikelpulver, einem Pulver aus Legierungselementen, ausgewählt aus Kupfer, Nickel und Molybdän, und einem Pulver aus Eisenlegierungen ausgewählt aus Eisen-Nickel, Eisen-Molybdän, und Eisen-Nickel-Molybdän-Legierungen;
eines Pulvers aus Eisenlegierungspartikel, die karbid-formende Legierungselemente in einer Menge zwischen 1 und 10 Gewichts% enthalten; und
eines Graphitpulvers in einer Menge kleiner als 1 Gewichts%,
- Kaltkompaktieren der Pulvermischung in einer geeigneten Form zum Formen einer konischen Innenbohrung (14), die mit Axialzähnen (16) versehen ist, wobei die Spitzen bzw. Scheitel der Zähne (16) einen flachen Abschnitt (17) mit einer Breite kleiner als 0,2 mm aufweisen; und
- Versteifen des so erhaltenen Teils durch Sintern in einer kontrollierten Atmosphäre bei einer Temperatur die kleiner ist als 1150° C zum Erhalten einer Stahlmatrix, die die Legierungselemente und einen Karbid angereicherten Eisenlegierungsbereich kohärent mit der Matrix enthalten.

2. Verfahren nach Anspruch 1, wobei der Zahnabstand kleiner als 0,7 mm ist.

3. Verfahren nach Anspruch 1, wobei die Zahnhöhe kleiner als 0,4 mm ist.

4. Verfahren nach Anspruch 1, wobei die karbid-formenden Legierungselemente ausgewählt sind, aus Kobalt, Wolfram, Vanadium und Niobium.

5. Verfahren nach Anspruch 1, wobei die Mischung von 2 bis 7 Gewichts% aus Eisenlegierungspartikeln, welche karbid-formende Legierungselemente enthalten, enthält.

6. Verfahren nach Anspruch 1, wobei die Pulvermischung keine Festschmiermittel enthält.

7. Synchronisationsring, der geformt wird durch Sintern bei einer Temperatur kleiner als 1150° C geeignet für den Betrieb in einer geschmierten Umgebung in einem Getriebe, aufweisend, eine konische Innenbohrung (14), die mit Axialzähnen (16) versehen ist, wobei die Spitzen bzw. Scheitel der Zähne (16) einen flachen Abschnitt (17) mit einer Breite kleiner als 0,2 mm aufweisen, wobei der Synchronisationsring ferner Folgendes aufweist:
- eine Stahlmatrix, die Elemente ausgewählt aus Kupfer, Nickel und Molybdän enthält; und
- karbid-angereicherte Eisenlegierungsbereiche kohärent mit der Matrix in einem Verhältnis zwischen 1 und 10 Volumen%.

8. Synchronisationsring nach Anspruch 7, wobei der Zahnabstand kleiner als 0,7 mm ist, und wobei die Zahnhöhe kleiner als 0,4 mm ist.

9. Synchronisationsring nach Anspruch 7, wobei die karbidangereicherten Eisenlegierungsbereiche ein oder mehrere der folgenden Elemente enthält: Kobalt, Wolfram, Vanadium und Niobium.

10. Synchronisationsring nach Anspruch 7, der ferner Axialnuten (30) aufweist, die an der konischen Innenbohrung (14) verteilt sind, wobei sich jede Nut über eine Oberfläche erstreckt, die wenigstens drei aufeinanderfolgenden Axialzähnen (16) entspricht, wobei zwei aufeinanderfolgende Nuten durch wenigstens zehn Axialzähne voneinander getrennt bzw. beabstandet sind.
